# EUROPÄISCHE PATENTSCHRIFT

(11) **EP 1 897 213 B1**
(45) Veröffentlichungstag und Bekanntmachung des Hinweises auf die Patenterteilung: **20.04.2011**
(21) Anmeldenummer: 06763357.8
(22) Anmeldetag: 30.05.2006
(51) Int. Cl.: H02M 1/14

(54) **NETZTEIL MIT VOLLBRÜCKENSCHALTUNG UND GROSSEM REGELUNGSBEREICH**
POWERING UNIT WITH FULL BRIDGE AND WIDE ADJUSTING RANGE CIRCUIT
BLOC D'ALIMENTATION A CIRCUIT EN PONT INTEGRAL ET GRANDE PLAGE DE REGLAGE

(30) Priorität: 30.06.2005 DE 102005030601
(43) Veröffentlichungstag der Anmeldung: 12.03.2008
(73) Patentinhaber: Siemens Aktiengesellschaft, 80333 München (DE)
(72) Erfinder: KOGARD, Markus, A-2102 Hagenbrunn (AT); CESNAK, Lorand, A-1050 Wien (AT)
(86) Internationale Anmeldenummer: PCT/EP2006/062704
(87) Internationale Veröffentlichungsnummer: WO 2007/003475

(56) Entgegenhaltungen:
- US-A1- 2003 185 026
- SONG-YI LIN ET AL: "Analysis and Design for RCD Clamped Snubber Used in Output Rectifier of Phase-Shift Full-Bridge ZVS Converters" IEEE TRANSACTIONS ON INDUSTRIAL ELECTRONICS, IEEE SERVICE CENTER, PISCATAWAY, NJ, US, Bd. 45, Nr. 2, April 1998 (1998-04), XP011023364 ISSN: 0278-0046
- BAEK J W ET AL: "Novel zero-voltage and zero-current-switching (ZVZCS) full bridge PWM converter with low output current ripple" TELECOMMUNICATIONS ENERGY CONFERENCE, 1997. INTELEC 97., 19TH INTERNATIONAL MELBOURNE, VIC., AUSTRALIA 19-23 OCT. 1997, NEW YORK, NY, USA,IEEE, US, 19. Oktober 1997 (1997-10-19), Seiten 257-262, XP010261362 ISBN: 0-7803-3996-7
- PATENT ABSTRACTS OF JAPAN Bd. 1996, Nr. 04, 30. April 1996 (1996-04-30) & JP 07 327366 A (NEMITSUKU RAMUDA KK), 12. Dezember 1995 (1995-12-12)

## Beschreibung

Die Erfindung betrifft ein Netzteil, bestehend aus zumindest einem Transformator, wenigstens einer Vollbrückenschaltung, über die eine Primärwicklung des Transformators an eine Eingangsgleichspannung angeschaltet ist und einer Sekundärwicklung, mittels welcher über eine Brücken-Gleichrichterschaltung sowie eine Ausgangsdrossel und einen Ausgangskondensator ein Ausgangskreis mit einer Ausgangsgleichspannung beaufschlagt ist und einer Entlastungsschaltung, bestehend aus einer Diode, einem Kondensator und einem Widerstand zur Reduktion von sekundärseitigen Spitzenspannungen.

Die Anzahl verschiedener Bauarten von Netzteilen hat in den letzten Jahrzehnten enorm zugenommen. Gleichzeitig sind auch die Anforderungen, die an Netzteile gestellt werden, gestiegen. Geringe Fehlerraten und ein hoher Wirkungsgrad sind dabei die wichtigsten Anforderungen. Eine weit verbreitete Bauart sind Schaltnetzteile, die typischerweise kleiner und leichter sind und weniger Verlustwärme produzieren als lineare Netzteile. Um die bei Schaltnetzteilen auftretenden Schaltverluste zu reduzieren und Strom- oder Spannungsspitzen zu limitieren, werden dem Stand der Technik nach sogenannte Entlastungsschaltungen, auch Snubberschaltungen genannt, benutzt. Damit werden empfindliche Schaltelemente geschützt und das EMC-Verhalten verbessert.

SONG-YI LIN ET AL: "Analysis and Design for RCD Clamped Snubber Used in Output Rectifier of Phase-Shift Full-Bridge ZVS Converters" IEEE CENTER, TRANSACTIONS ON INDUSTRIAL ELECTRONICS, IEEE SERVICE CENTER, PISCATAWAY, NJ, US, Bd. 45, Nr. 2, April 1998 (1998-04), XPO1 1023364 ISSN: 0278-0046 offenbart ein Netzteil entsprechend dem Oberbegriff von Anspruch 1.

Solche Entlastungsschaltungen bestehen in der Regel aus einem Kondensator sowie einer Diode und/oder einer Induktivität sowie gegebenenfalls einem Widerstand.

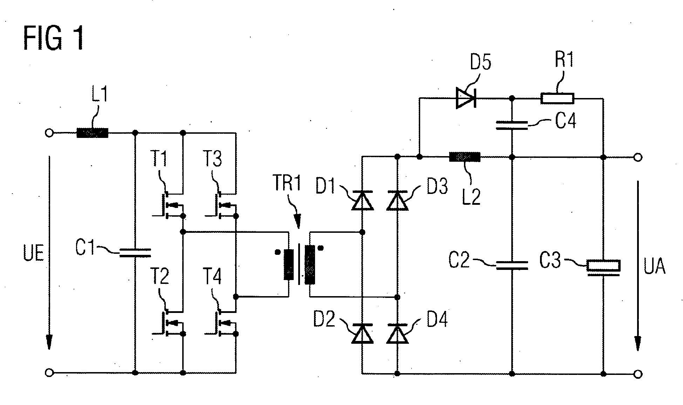

Bei als Vollbrückenwandler ausgeprägten Schaltnetzteilen wird nach dem Stand der Technik eine Entlastungsschaltung verwendet, um parasitäre Spannungsspitzen, die bei Kommutationsvorgängen entstehen, in die Entlastungsschaltung abzuleiten (siehe Fig. 1). Bei Vollbrückenwandlern mit einer konstanten Eingangs- und Ausgangsspannung kann die Entlastungsschaltung nach dem Stand der Technik so ausgelegt werden, dass nahezu die gesamte in einem Kondensator der Entlastungsschaltung gespeicherte Energie an einen Ausgangskondensator abgeführt wird und somit nicht verloren geht.

Für Vollbrückenwandler mit einem Eingangsspannungsbereich für den Anschluss an z.B. alternative Energieerzeuger (Brennstoffzellen, Photovoltaikelemente) ist die Auslegung einer Entlastungsschaltung zur Strom- und Spannungsspitzenbegrenzung schwieriger. In einer Ausgangsdrossel des Wandlers baut sich in der Zeit, in der eine Leistungsübertragung über den Transformator erfolgt, eine Spannung auf, die von der Differenz zwischen Eingangsgleichspannung mal dem Übersetzungsverhältnis des Transformators und der Ausgangsgleichspannung abhängig ist. Diese Spannung speist dann auch die Entlastungsschaltung, wodurch die Spannung im Kondensator der Entlastungsschaltung über die Ausgangsgleichspannung ansteigt. Durch diese Spannungsdifferenz kann dann nach dem Stand der Technik die im Kondensator der Entlastungsschaltung gespeicherte Energie nur mehr über einen Widerstand abgebaut oder über einen Tiefsetzsteller an den Ausgangskondensator abgegeben werden. Um die Anzahl der Komponenten und die Herstellungskosten gering zu halten wird dabei in der Regel ein Widerstand eingesetzt und der damit verbundene Verlust vernachlässigt.

Beim Einsatz von Netzteilen für alternative Energiequellen wird es zur Optimierung des Gesamtwirkungsgrades jedoch immer wichtiger, eingangsseitig einen großen Regelbereich vorzusehen. Die im Widerstand der Entlastungsschaltung verlorene Energie ist dann nicht mehr vernachlässigbar.

Der Erfindung liegt deshalb die Aufgabe zu Grunde, für ein Netzteil der eingangs erwähnten Art eine Verbesserung des Standes der Technik anzugeben.

Erfindungsgemäß geschieht dies durch ein Netzteil, bestehend aus zumindest einem Transformator, wenigstens einer Vollbrückenschaltung, über die eine Primärwicklung des Transformators an eine Eingangsgleichspannung angeschaltet ist und einer Sekundärwicklung, mittels welcher über eine Brücken-Gleichrichterschaltung sowie eine Ausgangsdrossel und einen Ausgangskondensator ein Ausgangskreis mit einer Ausgangsgleichspannung beaufschlagt ist und einer Entlastungsschaltung, bestehend aus einer Diode, einem Kondensator und einem Widerstand zur Reduktion von sekundärseitigen Spitzenspannungen, wobei eine weitere Sekundärwicklung, eine weitere Brücken-Gleichrichterschaltung und eine weitere Entlastungsschaltung vorgesehen sind, mittels derer über die Ausgangsdrossel und den Ausgangskondensator der Ausgangskreis mit einem Teil der Ausgangsgleichspannung beaufschlagt ist.

Durch diese Anordnung zweier Sekundärzweige erreicht man im kritischen oberen Eingangsspannungsbereich eine deutliche Reduktion der an den Widerständen abfallenden Spannungsdifferenz. Die abgeleitete Energie der durch die Schaltvorgänge hervorgerufenen Spannungsspitzen teilt sich auf die beiden Entlastungsschaltungen auf und reduziert so die Aufladung der Kondensatoren in den Entlastungsschaltungen. In den beiden Widerständen geht damit weniger Energie verloren und der Wirkungsgrad des Netzteils steigt.

In einer Ausprägung der Erfindung ist dabei ein Transformator mit zwei Sekundärwicklungen vorgesehen. Der Einsatz eines einzigen Transformators wirkt sich dabei vorteilhaft auf die Baugröße und die Herstellungskosten des Netzteils aus. Vorteilhaft ist es aber auch, wenn zwei Transformatoren mit jeweils einer Primärwicklung und einer Sekundärwicklung vorgesehen sind und jede der beiden Primärwicklungen über eine Vollbrückenschaltung an die Eingangsgleichspannung angeschaltet ist. Durch den Einsatz von zwei Transformatoren wird der Stromrippel des Stromes durch die Eingangsdrossel und der Stromrippel des Stromes durch die Ausgangsdrossel deutlich niedriger, was eine deutliche Reduktion eines eingangsseitigen und ausgangsseitigen Filters ermöglicht.

Von Vorteil ist es des Weiteren, wenn die wenigstens eine Vollbrückenschaltung aus vier Schaltern besteht und dass eine elektronische Steuerung zur Ansteuerung der Schalter vorgesehen ist. Die Schalter sind dann mit einer Phase Shift Modulation ansteuerbar, wobei die Todzeit modulierbar ist.

Günstig ist es zudem, die Schalter als Transistoren auszubilden, da es sich dabei um gängige, ausfallssichere Schalter handelt.

Die Erfindung wird nachfolgend in beispielhafter Weise unter Bezugnahme auf die beigefügten Figuren erläutert. Es zeigen in schematischer Darstellung:
- Fig. 1:: Vollbrückenwandler mit Entlastungsschaltung nach dem Stand der Technik
- Fig. 2:: Vollbrückenwandler mit geteilter Sekundärwicklung
- Fig. 3:: Vollbrückenwandler mit zwei Transformatoren

In Figur 1 ist ein Netzteil als Vollbrückenwandler mit einer sekundärseitigen Entlastungsschaltung nach dem Stand der Technik dargestellt. Primärseitig ist eine vier Transistoren T1, T2, T3 und T4 umfassende Vollbrücke über eine Eingangsdrossel L1 und ein Eingangskondensator C1 an eine Eingangsgleichspannung UE angeschlossen. Die Ausgänge der Vollbrücke sind mit einer Primärwicklung eines Transformators TR1 verbunden. Sekundärseitig ist am Transformator TR1 eine richtungsgleich gewickelte Sekundärwicklung angeordnet, an die eine Brücken-Gleichrichterschaltung angeschaltet ist. Die Brücken-Gleichrichterschaltung umfasst vier Dioden D1, D2, D3 und D4. Über eine Ausgangsdrossel L2 und zwei Ausgangskondensatoren C2 und C3 wird ein Ausgangskreis mit einer Ausgangsgleichspannung UA beaufschlagt. Der zweite Ausgangskondensator C3 ist dabei beispielhaft als gepolter Elektrolyt-Kondensator ausgebildet.

Sekundärseitig ist zusätzliche eine Entlastungsschaltung mit einer Diode D5, einem Kondensator C4 und einem Widerstand R1 angeordnet. Dabei ist die Anode der Diode D5 mit dem Spannungsausgang der Brücken-Gleichrichterschaltung und die Kathode der Diode D5 ist mit dem Kondensator C4 und dem Widerstand R1 der Entlastungsschaltung verbunden. Die zweiten Anschlüsse des Kondensators C4 und des Widerstands R1 liegen an der Ausgangsgleichspannung UA an.

Beim Einschalten des ersten Transistorenpaars T1 und T4 entsteht ein Stromimpuls. Der Anstieg des Impulses ist von der Streuinduktivität des Transformators TR1 begrenzt und ist auf die Kommutationsvorgänge und parasitären Kapazitäten der leitenden Dioden D3 und D2 zurückzuführen. Dieser Stromimpuls produziert ausgangsseitig ein Überschwingen der Spannung. Dabei kann die Spannungsspitze den zweifachen Wert der Eingangsgleichspannung UE mal dem Übertragungsverhältnis des Transformators TR1 annehmen. Diese Überspannung wird durch die Entlastungsschaltung begrenzt. Die Spezifikation der passiven Bauelemente der Entlastungsschaltung ist dabei sowohl vom gewählten Bereich der Eingangsgleichspannung UE als auch vom gewählten Bereich der Ausgangsgleichspannung UA abhängig. Beim Einschalten des zweiten Transistorenpaars T3 und T2 entsteht auch ein Stromimpuls und es laufen die gleichen Vorgänge mit den beiden leitenden Dioden D1 und D4 ab.

Die Differenz zwischen der sich im Kondensator C4 der Entlastungsschaltung aufbauenden Spannung und der Ausgangsgleichspannung UA fällt am Widerstand R1 ab. Die entstehenden Verluste sind dabei umso größer, je größer die Spannungsdifferenz ist.

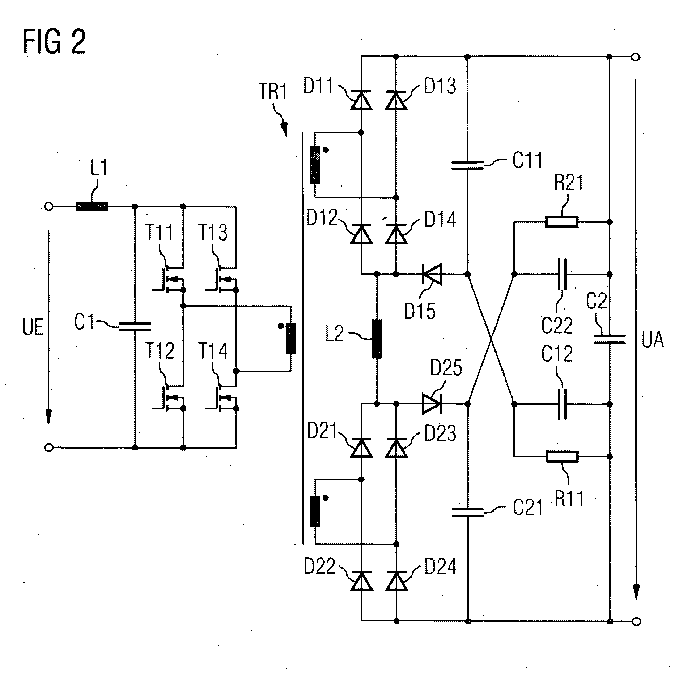

In einer in Figur 2 dargestellten beispielhaften erfindungsgemäßen Ausführung wird deshalb zur Reduktion der Spannungsdifferenz ein zweiter Sekundärzweig mit einer zweiten Entlastungsschaltung angeordnet. Primärseitig entspricht die Anordnung der in Figur 1 dargestellten. Sekundärseitig ist eine geteilte Sekundärwicklung am Transformator TR1 vorgesehen, wobei beide Wicklungen an eine Brücken-Gleichrichterschaltung angeschlossen sind. Die erste Brücken-Gleichrichterschaltung umfasst dabei vier Dioden D11, D12, D13 und D14, ebenso die zweite Brücken-Gleichrichterschaltung mit den vier Dioden D21, D22, D23 und D24. Dabei ist die Ausgangsdrossel L2 in der Weise zwischen den beiden Brücken-Gleichrichterschaltungen angeordnet, dass die Ausgänge der ersten Brücken-Gleichrichterschaltung mit einem ersten Anschluss der Ausgangsdrossel L2 und der Ausgangsgleichspannung UA und die Ausgänge der zweiten Brücken-Gleichrichterschaltung mit einem zweiten Anschluss der Ausgangsdrossel L2 und einem sekundärseitigen Bezugspotenzial verbunden sind.

Wie zu Figur 1 beschrieben treten auch hier durch Stromimpulse ausgangsseitige Überspannungen auf. Diese werden durch zwei an den Ausgängen der Brücken-Gleichrichterschaltungen angeordneten Entlastungsschaltungen begrenzt. Die erste Entlastungsschaltung umfasst eine Diode D15, zwei Kondensatoren C11 und C12 sowie einen Widerstand R11. Die Kathode der Diode 15 ist mit den Anoden der Dioden 12 und 14 der Brücken-Gleichrichterschaltung verbunden. Die Anode der Diode 15 ist mit den Kondensatoren C11 und C12 verbunden, wobei der zweite Anschluss des ersten Kondensators C11 mit der Ausgangsgleichspannung UA und der zweite Anschluss des zweiten Kondensators C12 mit dem sekundärseitigen Bezugspotenzial verbunden ist. Der Widerstand R11 ist parallel zum zweiten Kondensator C12 angeordnet.

Die zweite Entlastungsschaltung umfasst ebenfalls eine Diode 25, zwei Kondensatoren C21 und C22 sowie einen Widerstand R21. Die Anode der Diode 25 ist dabei mit den Kathoden der Dioden D21 und D23 der zweiten Brücken-Gleichrichterschaltung verbunden. Die Kathode der Diode 25 ist mit den beiden Kondensatoren C21 und C22 verbunden, wobei der zweite Anschluss des ersten Kondensators C21 mit dem sekundärseitigen Bezugspotenzial und der zweite Anschluss des zweiten Kondensators C22 mit der Ausgangsgleichspannung UA verbunden ist. Der Widerstand R21 ist parallel zum zweiten Kondensator C22 angeordnet.

Für beide Entlastungsschaltungen gilt dabei, dass je einer der beiden in den Schaltungen enthaltenen Kondensatoren weggelassen werden kann, ohne die Funktion zu beeinträchtigen. Der Einsatz von zwei Kondensatoren je Entlastungsschaltung ermöglicht jedoch eine einfachere Abstimmung der Bauelemente.

Die beispielhafte Anordnung bewirkt gegenüber dem Stand der Technik, dass für höhere Eingangsgleichspannungen UE, in denen Überspannungen in die Entlastungsschaltungen abgeleitet werden, geringere Verluste in den Widerständen R21 und R11 entstehen, da sich die Überspannungen auf die beiden Entlastungsschaltungen aufteilen.

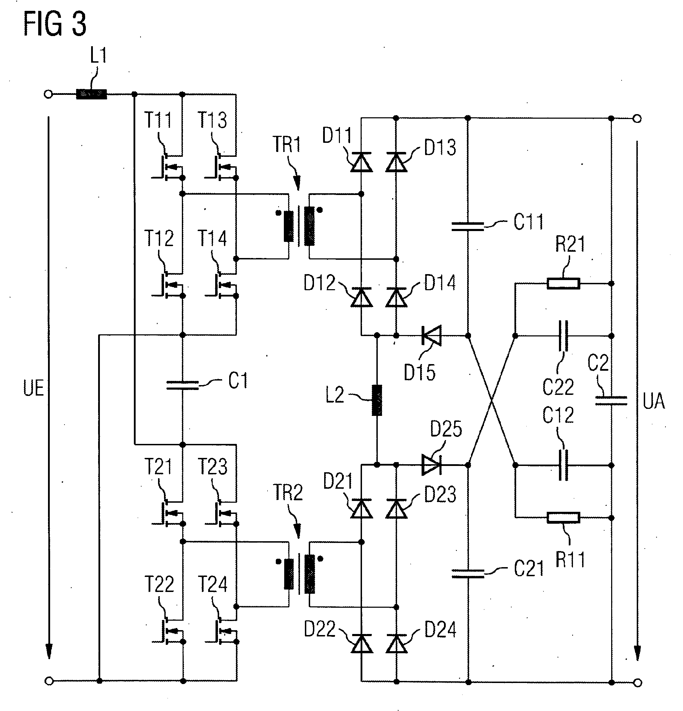

In der in Figur 3 dargestellten Ausführung entspricht der sekundäre Teil jenem in Figur 2 dargestellten, die beiden Sekundärwicklungen sind jedoch nicht an einem gemeinsamen sondern an je einem Transformator TR1 und TR2 angeordnet. Primärseitig ist eine Primärwicklung des ersten Transformators TR1 über eine Vollbrückenschaltung, bestehend aus vier Transistoren T11, T12, T13 und T14, über eine Eingangsdrossel L1 an eine Eingangsgleichspannung UE angeschlossen. Ebenso ist eine Primärwicklung des zweiten Transformators TR2 über eine Vollbrückenschaltung, bestehend aus vier Transistoren T21, T22, T23 und T24 über die Eingangsdrossel L1 an die Eingangsgleichspannung UE angeschlossen. Zusätzlich ist zwischen dem Ausgang der Eingangsdrossel L1 und einem primärseitigen Bezugspotenzial ein Glättungskondensator C1 angeordnet.

Bei dieser Topologie sind die Ansteuerimpulse der Vollbrückenschaltungen um 90° gegeneinander verschoben. Dabei entstehen die durch die Entlastungsschaltungen zu begrenzenden Spannungsspitzen in gleicher Weise wie bei einem Transformator mit geteilter Sekundärwicklung. Durch die Verschiebung der Ansteuerimpulse werden jedoch der Ausgangsstromrippel und der Eingangsstromrippel deutlich kleiner, wodurch eingangsseitig und ausgangsseitig kleinere Filter-Bauelemente eingesetzt werden können.

Auch hier kann bei jedem der beiden Entlastungsschaltungen ein Kondensator weggelassen werden, ohne die Funktionalität einzuschränken.

## Patentansprüche

1. Netzteil, bestehend aus
1. zumindest einem Transformator (TR1),
2. wenigstens einer Vollbrückenschaltung, über die eine Primärwicklung des Transformators (TR1) an eine Eingangsgleichspannung (UE) angeschaltet ist und
3.einer Sekundärwicklung, mittels welcher über eine Brücken-Gleichrichterschaltung sowie eine Ausgangsdrossel (L2) und einen Ausgangskondensator (C2) ein Ausgangskreis mit einer Ausgangsgleichspannung (UA) beaufschlagt ist und
4. einer Entlastungsschaltung, bestehend aus einer Diode (D5), einem Kondensator (C4) und einem Widerstand (R1) zur Reduktion von sekundärseitigen Spitzenspannungen,
**dadurch gekennzeichnet, dass** eine weitere Sekundärwicklung, eine weitere Brücken-Gleichrichterschaltung und eine weitere Entlastungsschaltung vorgesehen sind, mittels derer über die Ausgangsdrossel (L2) und den Ausgangskondensator (C2) der Ausgangskreis mit einem Teil der Ausgangsgleichspannung (UA) beaufschlagt ist.

2. Netzteil nach Anspruch 1, **dadurch gekennzeichnet, dass** ein Transformator (TR1) mit zwei Sekundärwicklungen vorgesehen ist.

3. Netzteil nach Anspruch 1, **dadurch gekennzeichnet, dass** zwei Transformatoren (TR1, TR2) mit jeweils einer Primärwicklung und einer Sekundärwicklung vorgesehen sind und jede der beiden Primärwicklungen über eine Vollbrückenschaltung an die Eingangsgleichspannung (UE) angeschaltet ist.

4. Netzteil nach einem der Ansprüche 1 bis 3, **dadurch gekennzeichnet, dass** die wenigstens eine Vollbrückenschaltung aus vier Schaltern besteht und dass eine elektronische Steuerung zur Ansteuerung der Schalter vorgesehen ist.

5. Netzteil nach Anspruch 4, **dadurch gekennzeichnet, dass** als Schalter Transistoren vorgesehen sind.

## Claims

1. Powering unit, comprising
1. at least one transformer (TR1),
2. at least one full bridge circuit, via which a primary winding of the transformer (TR1) is connected to an input DC voltage (UE) and
3. a secondary winding, by means of which an output DC voltage (UA) is applied to an output circuit via a bridge-type rectifier circuit as well as an output choke (L2) and an output capacitor (C2), and
4. a discharge circuit, comprising a diode (D5), a capacitor (C4) and a resistor (R1) for reduction of secondary peak voltages,
**characterised in that** a further secondary winding, a further bridge-type rectifier circuit and a further discharge circuit are provided, by means of which some of the output DC voltage (UA) is applied to the output circuit via the output choke (L2) and the output capacitor (C2).

2. Powering unit according to claim 1, **characterised in that** a transformer (TR1) with two secondary windings is provided.

3. Powering unit according to claim 1, **characterised in that** two transformers (TR1, TR2), each with one primary winding and one secondary winding, are provided and each of the two primary windings are connected to the input DC voltage (UE) via a full-bridge circuit.

4. Powering unit according to one of claims 1 to 3, **characterised in that** the at least one full-bridge circuit comprises four switches and that an electronic controller is provided for controlling the switches.

5. Powering unit according to claim 4, **characterised in that** transistors are provided as switches.

## Revendications

1. Bloc d'alimentation constitué de
1. au moins un transformateur ( TR1 ),
2. au moins un circuit en pont complet, par lequel une tension ( UE ) continue d'entrée est appliquée à un enroulement primaire du transformateur ( TR1 ) et
3. un enroulement secondaire au moyen duquel, par l'intermédiaire d'un circuit redresseur en pont ainsi que d'une bobine ( L2 ) de sortie et d'un condensateur ( C2 ) de sortie, un circuit de sortie est alimenté en une tension ( UA ) continue de sortie et
4. un circuit d'équilibrage, constitué d'une diode ( D5 ), d'un condensateur ( C4 ) et d'une résistance ( R1 ) pour la réduction de tension de crête du côté secondaire
**caractérisé en ce qu'**il est prévu un autre enroulement secondaire, un autre circuit redresseur en pont et un autre circuit d'équilibrage au moyen desquels, par l'intermédiaire de la bobine ( L2 ) de sortie et du condensateur ( C2 ) de sortie, le circuit de sortie est alimenté en une partie de la tension ( UA ) continue de sortie.

2. Bloc d'alimentation suivant la revendication 1, **caractérisé en ce qu'**il est prévu un transformateur ( TR1 ) ayant deux enroulements secondaires.

3. Bloc d'alimentation suivant la revendication 1, **caractérisé en ce qu'**il est prévu deux transformateurs ( TR1, TR2 ) ayant respectivement un enroulement primaire et un enroulement secondaire et la tension ( UE ) continue d'entrée est appliquée à chacun des deux enroulements secondaires par l'intermédiaire d'un circuit en pont complet.

4. Bloc d'alimentation suivant l'une des revendications 1 à 3, **caractérisé en ce que** le au moins un circuit en pont complet est constitué de quatre interrupteurs et **en ce qu'**il est prévu une commande électronique de commande des interrupteurs.

5. Bloc d'alimentation suivant la revendication 4, **caractérisé en ce qu'**il est prévu des transistors comme interrupteurs.
